# EUROPÄISCHE PATENTSCHRIFT

(11) **EP 0 608 499 B1**
(45) Veröffentlichungstag und Bekanntmachung des Hinweises auf die Patenterteilung: **19.03.1997**
(21) Anmeldenummer: 93118064.0
(22) Anmeldetag: 08.11.1993
(51) Int. Cl.: B60K 15/077

(54) **Tanksystem für flüssigen Kraftstoff, insbesondere für Verbrennungsmotoren in Kraftfahrzeugen**
Liquid fuel tank system, esp. for combustion engines in motor vehicles
Système de réservoir de carburant liquide, notamment pour moteur à combustion pour véhicules à moteur

(30) Priorität: 23.01.1993 DE 4301761
(43) Veröffentlichungstag der Anmeldung: 03.08.1994
(73) Patentinhaber: MERCEDES-BENZ AG, 70327 Stuttgart (DE)
(72) Erfinder: Müller, Manfred, Ing., D-70378 Stuttgart (DE); Scheurenbrand, Dieter, D-72649 Wolfschlugen (DE); Gollner, Franz, D-73770 Denkendorf (DE); Hoffmann, Karl-Heinz, Dipl.-Ing., D-70619 Stuttgart (DE); Köhl, Günter, Dipl.-Ing., D-73630 Remshalden (DE)

(56) Entgegenhaltungen:
- DE-A- 2 621 188
- DE-A- 2 724 840
- DE-A- 4 027 948
- DE-C- 3 605 992
- FR-A- 2 667 583

## Beschreibung

Die Erfindung betrifft ein Tanksystem für flüssigen Kraftstoff, insbesondere für Verbrennungsmotoren in Kraftfahrzeugen, mit einem Haupt- sowie einem Reservetank, einer vom Haupt- zum Reservetank führenden Zuführleitung, einer vom Reservetank zum Verbraucher bzw. Verbrennungsmotor führenden Vorlaufleitung mit Vorlaufpumpe und einer vom Verbraucher bzw. Verbrennungsmotor zum Tanksystem führenden Rücklaufleitung.

Bei einem aus der DE-A 40 27 948 bekannten derartigen Tanksystem wird der Reservetank, welcher mit dem Haupttank über eine Entlüftungsöffnung bzw. einen Entlüftungskanal zusätzlich verbunden ist, mittels einer Injektorpumpe nachgefüllt, welche Kraftstoff aus dem Haupttank über die Zuführleitung in den Reservetank fördert. Die Injektordüse dieser Pumpe wird über eine Druckleitung gespeist, welche druckseitig der Vorlaufpumpe von der Vorlaufleitung abzweigt. In der Zuführleitung ist ein druckgesteuertes Absperrventil angeordnet, welches nur dann öffnet, wenn druckseitig der Vorlaufpumpe in der Vorlaufleitung ein Druckschwellwert überschritten wird. Auch in der den Injektor der Injektorpumpe speisenden Druckleitung ist ein Ventil angeordnet, welches erst bei Überschreiten eines Druckschwellwertes öffnet und dann einen Zustrom von Kraftstoff zur Injektordüse ermöglicht.

Dieses Tanksystem besitzt eine vergleichsweise komplizierte Konstruktion. Außerdem können beim Betrieb zumindest dann Störungen auftreten, wenn damit gerechnet werden muß, daß der Kraftstoff, wie z.B. Dieselöl, bei tieferen Temperaturen schwerflüssig oder sogar wachsartig werden kann. In diesem Falle können die Ventile vergleichsweise leicht verstopfen.

Bei einem aus der DE-C 36 05 992 bekannten Tanksystem mit Haupt- und Reservetank ist die Vorlaufleitung normalerweise mit dem Haupttank verbunden. Der Reservetank wird bei befülltem Haupttank zwangsläufig über die Rücklaufleitung gefüllt. Sobald der Füllzustand erreicht ist, wird der rücklaufende Kraftstoff über eine Überlaufleitung aus dem Reservetank in den Haupttank überführt. Bei Bedarf, d.h. nach Entleerung des Haupttankes, kann der Reservetank durch Umschaltung von Ventilen an die Vorlaufleitung angeschlossen werden. Auch bei diesem bekannten System sind unerwünscht viele Ventile vorgesehen, welche unter ungünstigen Betriebsumständen verstopfen können. Außerdem muß zumindest in Kraftfahrzeugen damit gerechnet werden, daß der Inhalt des Haupttankes nicht vollständig ausgenutzt werden kann, weil mehr oder weniger große Restmengen des im Haupttank befindlichen Kraftstoffes aufgrund von Schwallbewegungen bei Kurvenfahrt u.dgl. nicht bzw. nicht mehr hinreichend gleichförmig in die Vorlaufleitung einlaufen können, so daß die Vorlaufleitung relativ früh mit dem Reservetank verbunden werden muß.

Aufgabe der Erfindung ist es nun, ein Tanksystem der eingangs angegebenen Art unter konstruktiver Vereinfachung funktional zu verbessern.

Diese Aufgabe wird erfindungsgemäß dadurch gelöst, daß der Reservetank unter Ausnutzung eines von der Vorlaufpumpe saugseitig erzeugten Unterdruckes über die Nachführleitung aus dem Haupttank nachfüllbar sowie mit einer Zwangsentlüftung versehen ist.

Erfindungsgemäß wird also der Kraftstoff aus dem Haupttank über den Reservetank zum Verbraucher bzw. Verbrennungsmotor geführt, wobei zur Aufrechterhaltung des Kraftstoffstromes lediglich der Saugunterdruck der Vorlaufpumpe ausgenutzt wird. Aufgrund der Zwangsentlüftung wird der Reservetank bei befülltem und auch schon bei gering befülltem Haupttank zwangsläufig gefüllt. Dieser Füllzustand bleibt aufrechterhalten, solange über die Zuführleitung eine hinreichende Menge des Kraftstoffes nachströmen kann. Bei zunehmend entleertem Haupttank muß dann zwar damit gerechnet werden, daß über die Nachführleitung auch Luft angesogen wird. Diese wird jedoch nachfolgend über die Zwangsentlüftung des Reservetanks wieder abgeführt, falls noch entsprechende Restmengen des Kraftstoffes aus dem Haupttank zur Nachführleitung gelangen. Auf diese Weise bildet der Reservetank dann, wenn der Haupttank weitgehend entleert ist und bei einem fahrenden Fahrzeug aufgrund von Schwallbewegungen der Restmenge des Kraftstoffes im Haupttank über die Nachführleitung nur noch unregelmäßig Kraftstoff nachzulaufen vermag, einen Pufferspeicher, über den eine weiterhin gleichförmige Versorgung des Verbrauchers bzw. Verbrennungsmotors sichergestellt wird.

Auf diese Weise lassen sich auch kleine Restmengen des Kraftstoffes praktisch vollständig für den Betrieb des Motors ausnutzen.

Gemäß einer bevorzugten Ausführungsform der Erfindung ist vorgesehen, daß die Einlauföffnung der Zuführleitung in einer offenen Sammelzone für Kraftstoff im Haupttank angeordnet ist und die Rücklaufleitung in diese Sammelzone mündet. Auf diese Weise wird zwangsläufig eine weitgehende Luftfreiheit des über die Nachführleitung strömenden Kraftstoffes gewährleistet. Außerdem ist vorteilhaft, daß der rücklaufende Treibstoff, welcher in der Regel in einer dem Verbrennungsmotor vorgeschalteten Heizung erwärmt wurde, auch den Eingangsbereich der Nachführleitung zu erwärmen vermag und dementsprechend auch bei kalten Temperaturen den Kraftstoff am Einlauf der Nachführleitung gut flüssig hält.

Gegebenenfalls kann der Rückstrom des Kraftstoffes für den Betrieb einer strömungsdynamischen Pumpvorrichtung zur Entlüftung des Reservetanks ausgenutzt werden.

In der Regel ist es jedoch vorteilhafter, den Saugunterdruck der Vorlaufpumpe auch zur Entlüftung des Reservetanks auszunutzen und eine gegebenenfalls in der Rücklaufleitung angeordnete strömungsdynamische Pumpvorrichtung lediglich dazu zu benutzen, im Falle eines mehrteiligen Haupttankes Kraftstoff aus verschiedenen Tankteilen zum Einlaufbereich der Nachführleitung bzw. zum Reservetank zu fördern.

Bei der Entlüftung des Reservetanks unter Ausnutzung des Saugunterdruckes der Vorlaufpumpe wird die Tatsache ausgenutzt, daß üblicherweise zwischen Verbraucher bzw. Motor und Vorlaufpumpe ein Kraftstoffilter angeordnet ist, welches ohnehin mit einer Entlüftung versehen sein muß, und von dessen Ausgangsseite der Kraftstoff üblicherweise mittels einer weiteren Pumpe, im Falle eines Verbrennungsmotors mittels der Einspritzpumpe, zum Verbraucher bzw. Motor sowie zur Rücklaufleitung weiterbefördert wird.

Die Entlüftung des Reservetanks unter Ausnutzung des Saugunterdruckes der Vorlaufpumpe kann beispielsweise erfolgen, indem in der Zulaufleitung eine durch den Saugunterdruck im Reservetank betriebene Injektorpumpe angeordnet und mit ihrer Saugseite mit dem oberen Bereich des Reservetanks verbunden ist, wobei die Zulaufleitung in Strömungsrichtung hinter der Injektorpumpe eine Auslauföffnung besitzt, die einer Einlauföffnung der Vorlaufleitung benachbart bzw. damit kombiniert und unter einer Abschirmung angeordnet ist, welche ein Aufsteigen von Luftblasen nach oben zumindest im wesentlichen verhindert und ein Eindringen der Luftblasen in die Einlauföffnung erleichtert.

Außerdem besteht die Möglichkeit, den oberen Bereich des Reservetanks über eine gedrosselte Entlüftungsleitung mit der Saugseite der Vorlaufpumpe zu verbinden, um eine Entlüftung über die Vorlaufpumpe zu ermöglichen.

Statt dessen kann auch ein zusätzliches Luftsaugrohr vorgesehen sein, dessen Eingang im oberen Bereich des Reservetanks angeordnet ist und dessen Ausgang in die Vorlaufleitung einmündet, wobei die Mündung in Strömungsrichtung des Kraftstoffes vom Einlauf der Vorlaufleitung mehr oder weniger weit entfernt ist.

Bei einer besonders bevorzugten Ausführungsform ist vorgesehen, daß ein Teilstück der Zuführleitung ein vom zugeführten Kraftstoff von oben nach unten durchströmtes Fallrohr mit einer mit dem oberen Bereich des Reservetanks kommunizierenden ersten Öffnung und einer mit dem unteren Bereich des Reservetanks kommunizierenden zweiten Öffnung (Auslauf) bildet, welche einer Einlauföffnung der Vorlaufleitung benachbart bzw. damit kombiniert und unter einer Abschirmung der oben angegebenen Art angeordnet ist. Solange im oberen Teil des Reservetanks Luft vorhanden ist, wird diese unter Bildung von Luftblasen an der ersten Öffnung in den Kraftstoffstrom eindringen und dann von der Vorlaufpumpe abgeführt werden. Wenn der Haupttank - nahezu - entleert ist, wird über die Zuführleitung auch zunehmend Luft in den Reservetank gelangen und sich im oberen Teil desselben ansammeln. Soweit nachfolgend wieder Kraftstoff über die Zuführleitung zufließt, erfolgt dann erneut eine Entlüftung des Reservetanks. Anderenfalls wird der im Reservetank befindliche restliche Kraftstoff von der Vorlaufpumpe vollständig abgepumpt werden.

Im übrigen wird hinsichtlich bevorzugter Merkmale der Erfindung auf die Ansprüche sowie die nachfolgende Erläuterung vorteilhafter Ausführungsformen verwiesen, die in der Zeichnung dargestellt sind.

Dabei zeigt
- Fig. 1: eine schematisierte Gesamtdarstellung eines erfindungsgemäßen Tanksystems mit zugehörigem Verbrennungsmotor,
- Fig. 2: eine vergrößerte Darstellung des Reservetanks der Fig. 1,
- Fig. 3: eine abgewandelte Ausführungsform des Reservetanks,
- Fig. 4: eine weitere abgewandelte Form des Reservetanks,
- Fig. 5: eine erste Möglichkeit zur Ausbildung von Auslauf der Zuführleitung und Einlauf der Vorlaufleitung,
- Fig. 6: eine gegenüber Fig. 5 abgewandelte Konstruktion,
- Fig. 7: eine vergrößerte Darstellung einer zur Entlüftung des Reservetanks dienenden Injektorpumpe,
- Fig. 8: eine abgewandelte Ausführung der Injektorpumpe,
- Fig. 9: eine besonders bevorzugte Ausführungsform einer zur Entlüftung des Reservetanks dienenden Injektorpumpe, wobei konstruktive Einzelheiten näher dargestellt sind,
- Fig. 10: zwei weitere Ausführungsformen des Reservetanks, wobei die Entlüftung wiederum über eine Injektorpumpe erfolgt,
- Fig. 11: eine Ausführungsform eines Reservetanks, bei dem eine Luftabsaugleitung zwischen oberem Teil des Reservetanks und der Vorlaufleitung angeordnet ist,
- Fig. 12: eine gegenüber Fig. 11 abgewandelte Anordnung,
- Fig. 13: einen Reservetank, bei dem zur Entlüftung zwischen der Saugseite der Vorlaufpumpe und den oberen Bereichen des Reservetanks eine gedrosselte Entlüftungsleitung vorhanden ist,
- Fig. 14: einen Reservetank, bei dem die Entlüftung mittels eines im Verlauf der Zuführleitung angeordneten Fallrohres erfolgt,
- Fig. 15: eine gegenüber Fig. 14 abgewandelte Ausführungsform,
- Fig. 16: eine Vorrichtung zur Entschäumung des rücklaufenden Kraftstoffes,
- Fig. 17: eine abgewandelte Ausführungsform dieser Vorrichtung,
- Fig. 18: einen Vertikalschnitt einer Kraftstoffsammelzone im Haupttank,
- Fig. 19: ein Schnittbild entsprechend der Schnittlinie XIX-XIX in Fig. 18,
- Fig. 20: einen Vertikalschnitt einer abgewandelten Sammelzone und
- Fig. 21: ein Schnittbild entsprechend der Schnittlinie XXI-XXI in Fig. 10.

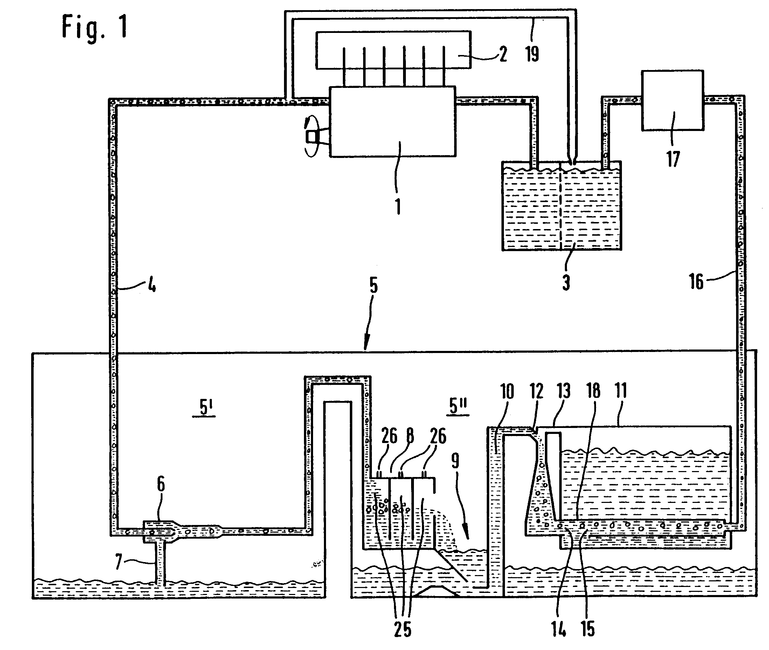

Gemäß Fig. 1 ist eine Einspritzpumpe 1 eines nur schematisch dargestellten Verbrennungsmotors 2 eingangsseitig mit einem Kraftstoffilter 3 und ausgangsseitig mit einer Rücklaufleitung 4 verbunden, über die überschüssiger, vom Verbrennungsmotor 2 nicht benötigter Kraftstoff in einen Haupttank 5 zurückgeleitet wird, welcher als Kraftstoffreservoir für den Verbrennungsmotor 2 vorgesehen ist.

Der Haupttank 5 besitzt im dargestellten Beispiel zwei über einen Überlauf miteinander verbundene Tankteile 5' und 5''.

An der Rücklaufleitung 4 ist eine erste Injektorpumpe 6 angeordnet, deren Injektordüse von dem durch die Rücklaufleitung 4 zurückströmenden Kraftstoff durchsetzt wird und deren Sauganschluß 7 mit einem unteren Bereich des Tankteiles 5' kommuniziert, so daß mit der ersten Injektorpumpe 6 Kraftstoff aus dem Tankteil 5' angesaugt und zusammen mit dem von der Einspritzpumpe 1 zurückströmenden Kraftstoff einer Entschäumungsvorrichtung 8 zugeleitet werden kann, aus der der Kraftstoff in eine Kraftstoffsammelzone 9 im Tankteil 5'' ausläuft.

Die Sammelzone 9, deren bevorzugte konstruktive Ausbildung weiter unten erläutert wird, besitzt eine zum unteren Bereich des Tankteiles 5'' führende Öffnung, welche in unmittelbarer Nachbarschaft der Einlauföffnung einer Zuführleitung 10 angeordnet ist, über die ein Reservetank 11 eingangsseitig mit dem Tankteil 5'' verbunden ist.

An der Zuführleitung 10 ist im Beispiel der Fig. 1 eine zweite Injektorpumpe 12 angeordnet, deren Injektordüse vom durch die Zuführleitung 10 strömenden Kraftstoff durchsetzt wird und deren Sauganschluß 13 mit dem oberen Bereich des Reservetanks 11 verbunden ist, derart, daß dort gegebenenfalls befindliche Luft angesaugt und zusammen mit dem die zweite Injektorpumpe 12 durchströmenden Kraftstoff zu dem mit dem unteren Bereich des Reservetanks 11 verbundenen Ausgang 14 der Zuführleitung 10 mitgeführt wird.

Der Ausgang 14 der Zuführleitung 10 ist unmittelbar benachbart zum Einlauf 15 einer Vorlaufleitung 16 angeordnet, über die der Reservetank 11 mit der Saugseite einer Vorlauf- bzw. Kraftstoffpumpe 17 verbunden ist. Ausgang 14 und Einlauf 15 sind derart unter einer beide überdeckenden Abschirmung 18 angeordnet, daß einerseits vom Ausgang 14 Kraftstoff in den Reservetank 11 einströmen kann und andererseits verhindert wird, daß größere Mengen der vom Kraftstoff am Ausgang 14 mitgeführten Luft in den oberen Bereich des Reservetanks 11 aufsteigen. Vielmehr wird diese Luft überwiegend - bei arbeitender Vorlaufpumpe 17 - vom Einlauf 15 der Vorlaufleitung 16 aufgenommen.

Die Druckseite der Vorlaufpumpe 17 ist mit dem Eingang des Kraftstoffilters 3 verbunden, welcher mit einer Entlüftungsleitung 19 versehen ist, über die die im Kraftstoff mitgeführte Luft in die Rücklaufleitung 4 überführt wird.

Bei laufendem Motor bzw. bei arbeitender Vorlaufpumpe 17 wird also der Saugunterdruck der Vorlaufpumpe 17 einerseits dazu ausgenutzt, über die Zuführleitung 10 Kraftstoff aus der Sammelzone 9 bzw. dem Tankteil 5'' in den Reservetank 11 und die Vorlaufleitung 16 einzusaugen. Andererseits betreibt der angesaugte Kraftstoffstrom die zweite Injektorpumpe 12 zur Entlüftung des Reservetanks 11, so daß die Vorlaufpumpe 17 ein Kraftstoff-Luft-Gemisch über die Vorlaufleitung 16 aus dem Reservetank 11 abführt und der Reservetank 11 innerhalb kurzer Zeit mit Kraftstoff befüllt wird, vorausgesetzt, daß an der Kraftstoffsammelzone 9 noch Kraftstoff vorhanden ist.

Sobald dann der Tank 5 weitestgehend geleert ist und in der Kraftstoffsammelzone 9 praktisch kein weiterer Kraftstoff mehr vorhanden ist, tritt über die Zuführleitung 10 zunehmend Luft in den Reservetank 11 ein, während der im Reservetank 11 vorhandene Kraftstoff über die Vorlaufpumpe 17 vollständig abgepumpt wird.

Sollte aufgrund von Schwallbewegungen des Kraftstoffes im Haupttank 5 an der Kraftstoffsammelzone 9 nur zeitweise Kraftstoff nachfließen können, so wird der Reservetank 11 bei arbeitender Vorlaufpumpe 17 je nach Vorhandensein von Kraftstoff am Einlauf der Zuführleitung 10 zeitweise Luft und zeitweise Kraftstoff aufnehmen, wobei im letzteren Falle jeweils auch eine Entlüftung des Reservetanks 11 bei zusätzlicher Nachfüllung desselben bewirkt wird. In diesem Falle wirkt der Reservetank 11 nach Art eines Pufferspeichers für Kraftstoff und sorgt für einen gleichbleibenden Kraftstoffvorlauf zur Vorlaufpumpe 17.

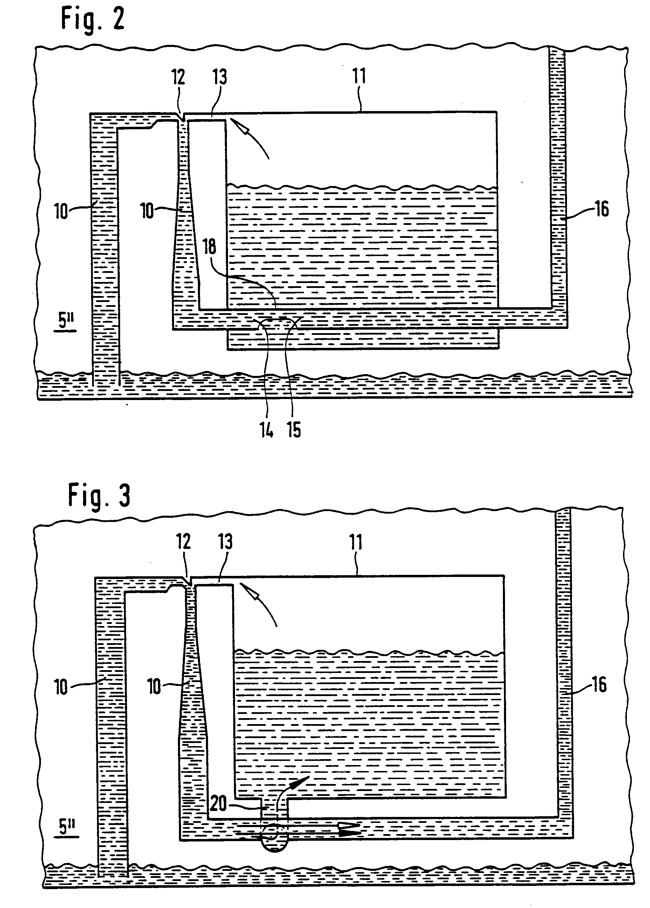

In Fig. 2 ist der Reservetank 11 der Fig. 1 nochmals vergrößert dargestellt. Man erkennt, daß der Auslauf 14 der Zuführleitung 10 sowie der Einlauf 15 der Vorlaufleitung 16 innerhalb des Reservetanks 11 angeordnet und als gemeinsame langlochähnliche Öffnung auf der Unterseite eines Rohres ausgebildet sind, über das Zuführ- und Vorlaufleitung 10 und 16 innerhalb des Reservetanks 11 miteinander verbunden sind.

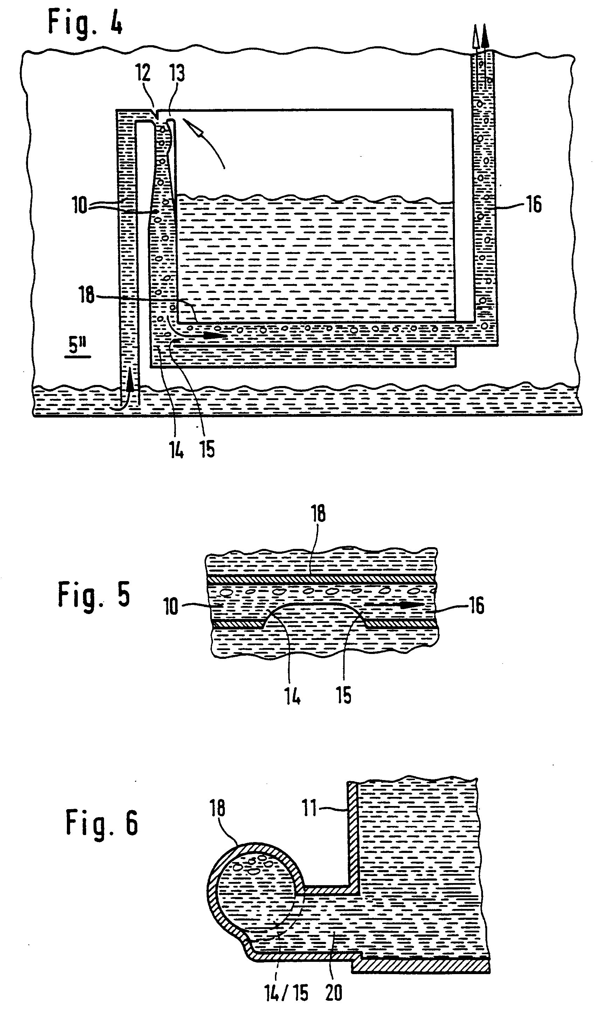

In Fig. 5 ist dieser Übergangsbereich zwischen Zuführleitung 10 und Vorlaufleitung 16 vergrößert dargestellt.

Bei der Ausführungsform nach Fig. 3 sind der an die Injektorpumpe 12 anschließende Teil der Zuführleitung 10 sowie die Vorlaufleitung 16 im wesentlichen außerhalb des Reservetanks 11 angeordnet, jedoch mit diesem über einen Fortsatz 20 verbunden. Dieser Verbindungsbereich ist in Fig. 6 im Querschnitt dargestellt. Innerhalb des Verbindungsbereiches bilden die Zuführleitung 10 und die Vorlaufleitung 16 ein im wesentlichen horizontales Rohr, welches nach unten bzw. nach schräg unten mit dem Fortsatz 20 über eine große Öffnung kommuniziert, welche einerseits den Ausgang 14 der Zuführleitung 10 und andererseits den Einlauf 15 der Vorlaufleitung 16 bildet. Innerhalb dieses Verbindungsbereiches bildet die Oberseite des vorgenannten Rohres die Abschirmung 18, unter der vom Kraftstoff in der Zuführleitung 10 mitgeführte Luftblasen gefangengehalten und in den Einlauf 15 der Vorlaufleitung 16 geführt werden.

Die in Fig. 4 dargestellte Ausführungsform entspricht funktional der Ausführungsform nach Fig. 2, jedoch mit dem Unterschied, daß der an die Injektorpumpe 12 anschließende Teil der Zuführleitung 10 innerhalb des Reservetanks 11 an einem Wandbereich dieses Tanks angeordnet ist und daß der an der Öffnung 14 infolge der abgewinkelten Strömungsführung auftretende dynamische Druck zur Beschleunigung der Befüllung des Reservetanks 11 ausgenutzt wird.

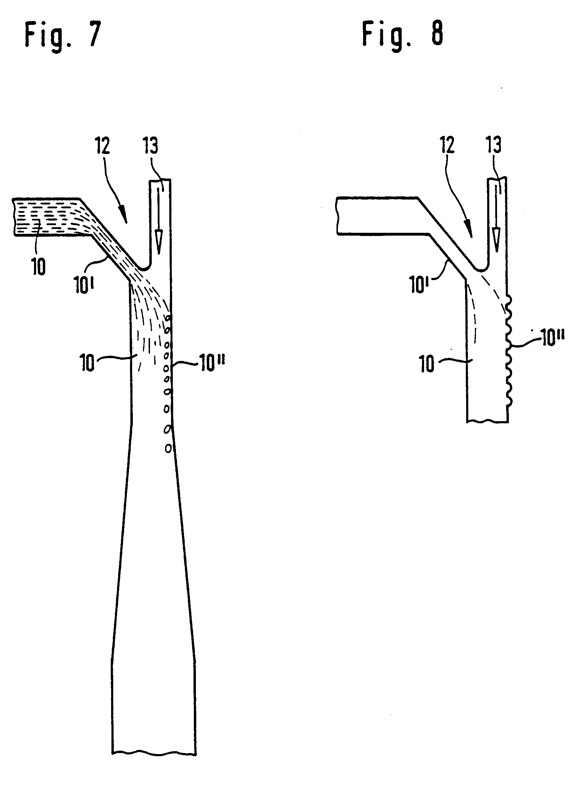

In Fig. 7 ist die zweite Injektorpumpe 12 vergrößert dargestellt. Die Injektordüse wird durch einen Abschnitt 10' der Zuführleitung 10 mit sehr engem Querschnitt gebildet. Dieser Abschnitt 10' mündet von schräg seitwärts in einen nach abwärts führenden Teil der Zuführleitung 10 ein, wobei unmittelbar neben der Mündung des Abschnittes 10' der Sauganschluß 13 der Injektorpumpe 12 angeordnet ist, welcher mit dem Abschnitt 10' etwa V-förmig spitzwinklig verbunden ist.

Durch die schräge Anordnung des die Injektordüse bildenden Abschnittes 10' wird erreicht, daß der aus dem Abschnitt 10' austretende Kraftstoffstrahl schräg gegen einen Wandabschnitt 10'' prallt, so daß der Kraftstoffstrahl durch die intensive Wirbelbildung mit kleinvolumigen Luftblasen vermengt wird. Dadurch wird die anderenfalls unter Umständen bestehende Gefahr vermieden, daß sich in Strömungsrichtung hinter dem Abschnitt 10'' eine nahezu stationäre große Luftblase bilden kann.

Gegebenenfalls kann der Wandabschnitt 10'' gemäß Fig. 8 eine wellenartig rauhe Oberfläche haben, um den Kraftstoffstrahl noch stärker zu zerreißen und eine intensive Vermengung des Kraftstoffes mit kleinen Luftbläschen zu erreichen.

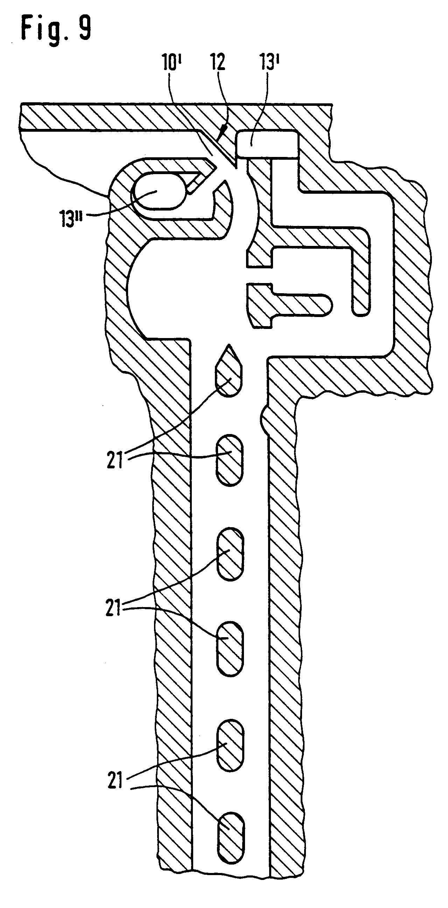

Gemäß Fig. 9 kann die Zuführleitung 10 in Strömungsrichtung hinter dem die Injektordüse bildenden Abschnitt 10' labyrinthartig ausgebildet und im weiteren Verlauf mit Störkonturen 21 versehen sein, um eine besonders intensive Verwirbelung von Kraftstoff und Luft unter Bildung sehr kleiner Luftbläschen zu ermöglichen. Dabei ist vorteilhaft, wenn der im übrigen in Fig. 9 nicht näher dargestellte Sauganschluß 13 zwei Mündungen 13' und 13'' neben dem Düsenabschnitt 10' aufweist. Dadurch kann vom Düsenstrahl im labyrinthartigen Bereich der Zuführleitung eine intensive Wechselströmung mit Teilströmen wechselnder Richtung erzeugt werden, wodurch die Bildung großer stationärer Luftblasen besonders sicher verhindert werden kann.

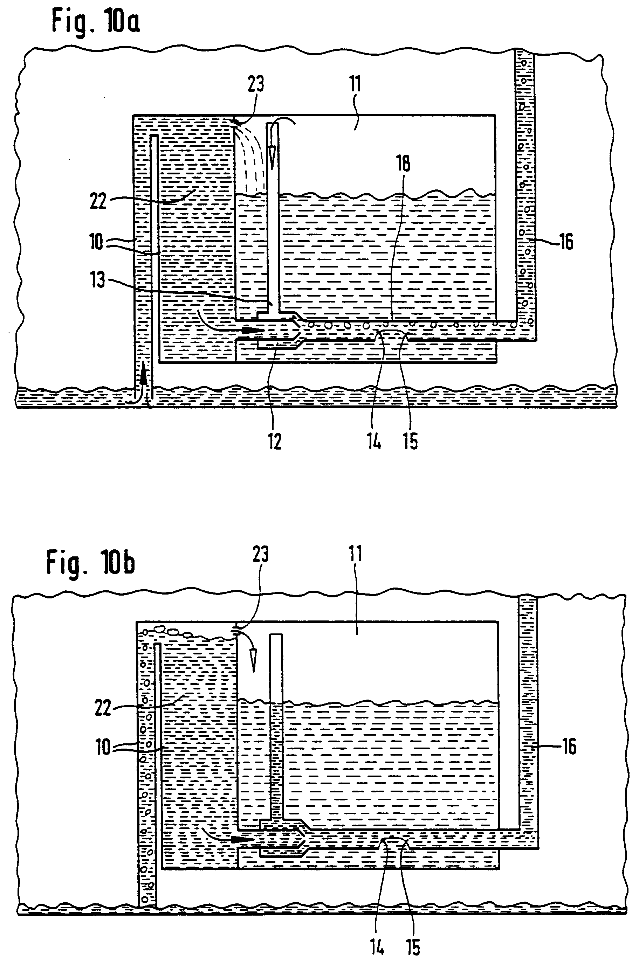

Bei der in Fig. 10 dargestellten Ausführungsform bildet die Zuführleitung 10 in Strömungsrichtung vor der Injektorpumpe 12, welche bei dieser Ausführungsform unten im bzw. am Reservetank 11 angeordnet ist, einen vom Kraftstoff von oben nach unten durchströmten Entgasungsraum 22, welcher im oberen Bereich durch eine Drosselöffnung 23 mit dem oberen Bereich des Reservetanks 11 verbunden ist. Dieser obere Bereich ist aufgrund der tiefen Anordnung der zweiten Injektorpumpe 12 über eine entsprechend lange Leitung mit dem Sauganschluß 13 der zweiten Injektorpumpe 12 verbunden. Soweit der Kraftstoff in der Zuführleitung 10 bei sehr niedrigem Pegel des Kraftstoffes im Haupttank 5 Luftblasen mitführt, sammelt sich gemäß Fig. 10b im oberen Bereich des Entgasungsraumes 22 Luft an, die durch die Drosselöffnung 23 in den oberen Bereich des Reservetanks 11 übertreten kann. Der wesentlich geringere Drosselwiderstand der Luft bewirkt, daß die Druckdifferenz an der Drosselbohrung 23 und damit auch der Unterdruck im Reservetank 11 zusammenbricht, so daß Kraftstoff aus dem Reservetank 11 durch die Öffnung 15 in die Vorlaufleitung 16 angesaugt wird. Sollte der Entgasungsraum 22 nur noch bzw. weitestgehend mit Luft gefüllt sein, so wird von der Vorlaufpumpe 17 der restliche, im Reservetank 11 befindliche Kraftstoff über den Eingang 15 der Vorlaufleitung 16 abgepumpt.

Falls der Entgasungsraum 22 gemäß Fig. 10a vollständig mit Kraftstoff gefüllt ist, wie es regelmäßig der Fall ist, wenn der Kraftstoffpegel im Haupttank 5 deutlich oberhalb des Einlaufes der Zuführleitung 10 liegt, so kann gegebenenfalls auch Kraftstoff durch die Drosselöffnung 23 in den Reservetank 11 übertreten. Aufgrund des Drosselwiderstandes der Drosselöffnung 23 strömt jedoch der Kraftstoff aus dem Entgasungsraum 22 im wesentlichen über die zweite Injektorpumpe 12 ab, so daß diese die Luft aus dem Reservetank wirksam entfernen kann.

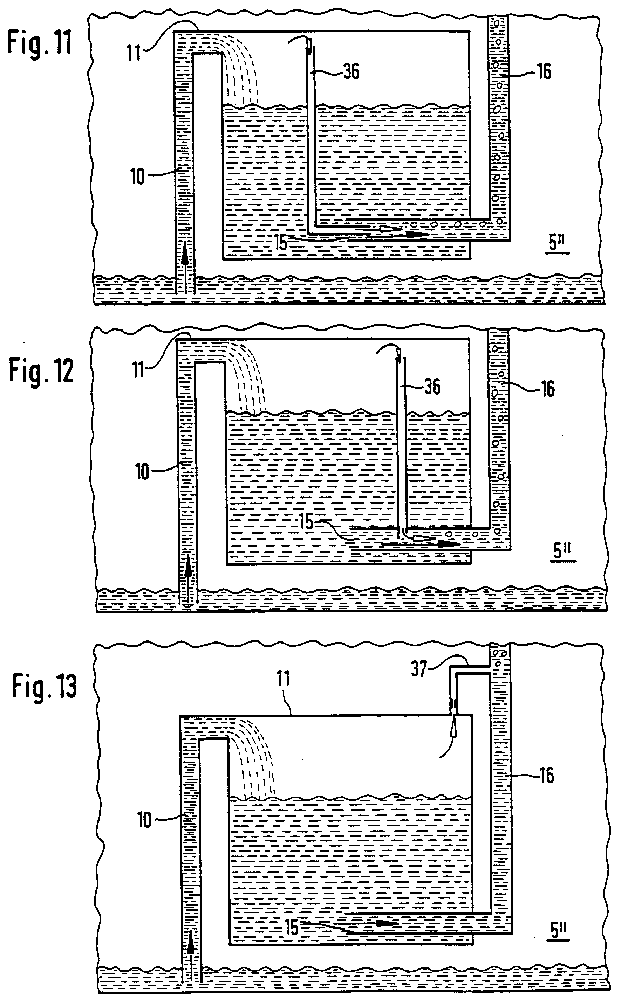

Bei der Ausführungsform nach Fig. 11 mündet die Zuführleitung 10 in den oberen Bereich des Reservetanks 11, und die Vorlaufleitung 16 besitzt ihren Einlauf 15 im unteren Bereich des Reservetanks 11. Zwischen dem oberen Bereich des Reservetanks 11, wo sich gegebenenfalls Luft ansammeln kann, und dem Eingang 15 der Vorlaufleitung 16 ist eine Entlüftungsleitung 36 angeordnet, welche mit ihrem unteren Ende mehr oder weniger weit in die Vorlaufleitung hineinragt, so daß der in die Vorlaufleitung 16 einströmende Kraftstoff über die Entlüftungsleitung 36 Luft aus dem oberen Bereich des Reservetanks 11 mitreißen kann.

Bei der Ausführungsform nach Fig. 12 mündet die Entlüftungsleitung 36 in Strömungsrichtung hinter dem Einlauf 15 der Vorlaufleitung 16 von der Seite her in die Vorlaufleitung 16 ein. Dabei ist das untere Ende der Entlüftungsleitung 36 schräg abgeschnitten, derart, daß die untere Öffnung der Entlüftungsleitung 36 im wesentlichen in Strömungsrichtung des Kraftstoffes in der Vorlaufleitung 16 weist. Auch hier kann der in die Vorlaufleitung 16 einströmende Kraftstoff Luft aus dem oberen Bereich des Reservetanks mitreißen.

Sowohl bei der Ausführungsform nach Fig. 11 als auch der Ausführungsform nach Fig. 12 wird zur Entlüftung des Reservetanks 11 der Effekt ausgenutzt, daß am unteren offenen Ende der Entlüftungsleitung 36 aufgrund strömungsdynamischer Effekte im strömenden Kraftstoff ein dynamischer Unterdruck auftritt. Denn der in die Vorlaufleitung 16 hineinragende Teil der Entlüftungsleitung 36 bildet innerhalb der Vorlaufleitung 16 eine Verengung des offenen Querschnittes, so daß vergleichsweise hohe Strömungsgeschwindigkeiten und dementsprechend geringe dynamische Drucke auftreten.

Bei der Ausführungsform nach Fig. 13 ist die Vorlaufleitung 16 über eine gedrosselte Entlüftungsleitung 37 mit dem oberen Bereich des Tanks 11 verbunden. Somit wird neben dem Kraftstoff aus dem unteren Bereich des Reservetanks 11 auch Luft aus dem oberen Bereich des Reservetanks 11 abgeführt, sobald die Vorlaufpumpe 17 (vgl. Fig. 1) arbeitet. Die Drossel in der Entlüftungsleitung 37 ist so bemessen, daß auch dann, wenn über die Zulaufleitung 10 nur noch Luft in den Reservetank 11 einströmt (weil z.B. der Haupttank 5 entleert ist), in dem Abschnitt der Vorlaufleitung 16 zwischen dem Einlauf 15 und der Entlüftungsleitung 37 noch ein hinreichender Unterdruck erzeugt werden kann, um Kraftstoff aus dem unteren Bereich des Reservetanks 11 abzupumpen.

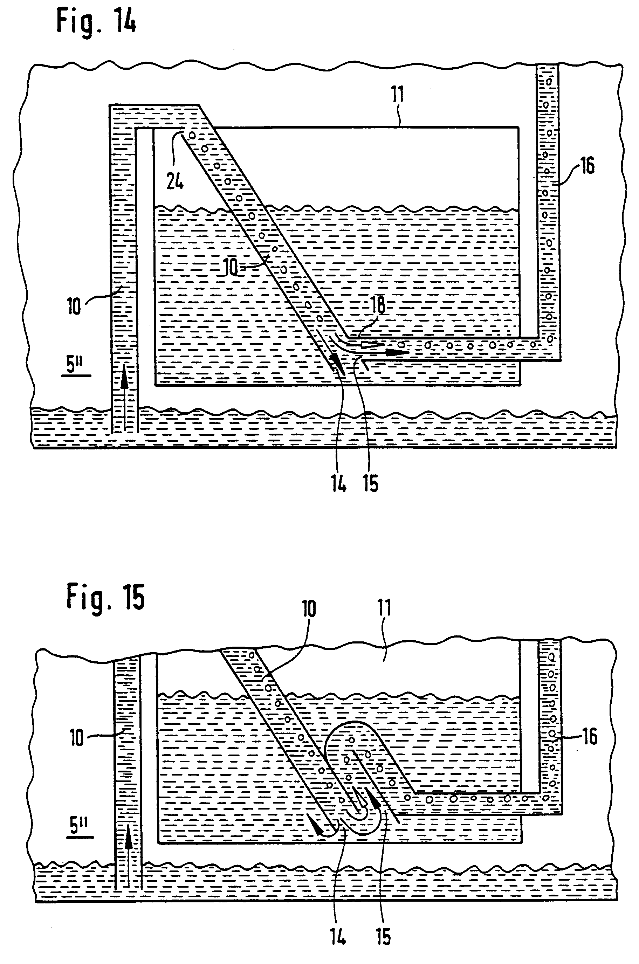

Bei der in Fig. 14 dargestellten Ausführungsform bildet die Zuführleitung 10 im bzw. am Reservetank 1 eine Fallleitung, welche über eine kleine Öffnung 24 mit dem obersten Bereich des Reservetanks 11 kommuniziert und an ihrem unteren Ende über den Ausgang 14 mit dem untersten Bereich des Reservetanks 11 verbunden ist. Am Ausgang 14 schließt wiederum der Einlauf 15 der Vorlaufleitung 16 an, und zwar derart, daß wiederum im Kraftstoff mitgeführte Luftblasen durch eine Abschirmung 18 an einem Aufsteigen in den oberen Bereich des Reservetanks 11 gehindert und weitestgehend der Vorlaufleitung 16 zugeführt werden.

Solange der Pegel des Kraftstoffes im Reservetank 11 hinreichend weit unterhalb der Öffnung 24 liegt, kann der Kraftstoffstrom, welcher die Zuführleitung 10 durchsetzt, im Bereich der Öffnung 24 aufgrund des dortigen Luftzutrittes Luft aus dem oberen Bereich des Reservetanks 11 aufnehmen und mitführen. Diese Luftmengen werden dann von dem durch die Zuführleitung 10 nachlaufenden Kraftstoff abgedeckt, so daß sich im Fallrohrteil der Zuführleitung 10 im Kraftstoffstrom mitgeführte Luftblasen bilden. Das übertreten der Luft aus dem oberen Bereich des Reservetanks 11 durch die Öffnung 24 in die kraftstofführende Zuführleitung 10 wird durch den Druckunterschied an der Öffnung 24 bewirkt, der entsprechend den Gesetzmäßigkeiten bei kommunizierenden Gefäßen vom Unterschied des Kraftstoffpegels im Reservetank 11 gegenüber der Höhe der Kraftstoffsäule im Fallrohrteilbis zur Verbindungsöffnung 24 abhängt - unter Berücksichtigung der reduzierten mittleren Dichte infolge der vom Kraftstoff mitgeführten Luftblasen. Damit kann der Reservetank 11 wiederum wirksam entlüftet werden.

Der Entlüftungseffekt ist besonders wirksam, wenn die Öffnung 24 derart angeordnet ist, daß der die Zuführleitung 10 durchströmende Kraftstoff nicht ohne weiteres in die Öffnung 24 einströmen kann. Im übrigen sollte das Fallrohrteil der Zuführleitung 10 zwar einerseits einen hinreichend großen Querschnitt haben, um auch bei vorübergehender Schwerflüssigkeit des Kraftstoffes jegliche Verstopfungsgefahr zu vermeiden. Andererseits sollte jedoch dieser Bereich auch keinen unnötig großen Querschnitt haben, um eine für das Mitführen der Luftblasen ausreichend hohe Strömungsgeschwindigkeit des Kraftstoffes ermöglichen zu können.

Die Ausführungsform nach Fig. 15 unterscheidet sich von der Ausführungsform nach Fig. 14 im wesentlichen nur dadurch, daß der Einlauf 15 der Vorlaufleitung 16 einen nach unten geöffneten, den Ausgang 14 der Zuführleitung 10 weitestgehend von oben überdeckenden Napf bildet, in welchem die vom Kraftstoff in der Zuführleitung 10 mitgeführten Luftblasen besonders wirksam aufgefangen und damit der Vorlaufleitung 16 zugeführt werden können. Außerdem wird dabei die strömende Flüssigkeit nach dem Austritt aus der Öffnung 14 des Fallrohrteilsum 180° umgelenkt, wodurch der dynamische Druck, der in den Kraftstoff des Reservetanks hineinwirkt, und damit auch der Druckunterschied an der Verbindungsöffnung 24 noch erhöht wird. Dieser Effekt kann die im Fallrohrteilinsbesondere bei hohen Strömungsgeschwindigkeiten auftretenden Strömungsverluste kompensieren.

Die Entschäumungsvorrichtung 8 kann gemäß Fig. 1 im wesentlichen aus mehreren, im dargestellten Beispiel aus drei in Strömungsrichtung hintereinander angeordneten Kammern 25 bestehen, welche nebeneinander angeordnet und voneinander durch Wände abgetrennt sind, in deren unteren Bereichen zur Verbindung der Kammern 25 Öffnungen vorhanden sind. Im oberen Bereich sind die Kammern 25 über Entlüftungsöffnungen 26 mit dem Haupttank 5 verbunden. Die in Strömungsrichtung letzte Kammer 25 besitzt eine seitliche Öffnung, aus der der Kraftstoff zur Sammelzone 9 ausläuft.

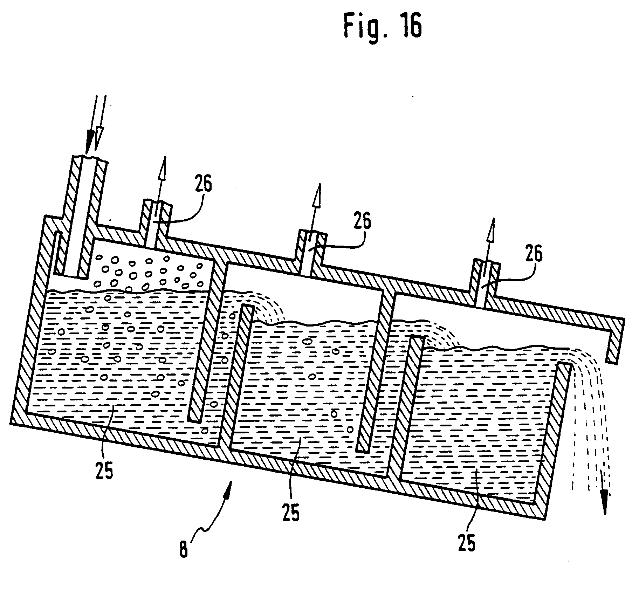

Gemäß Fig. 16 können zwischen den Kammern 25 auch jeweils doppelte Wände angeordnet sein, wobei der Raum zwischen den doppelten Wänden mit der in Strömungsrichtung vorderen Kammer 25 über untere Öffnungen und mit der in Strömungsrichtung nachfolgenden Kammer 25 über obere Öffnungen verbunden ist.

Der Vorteil dieser Ausführungsform liegt darin, daß die von der Entschäumungsvorrichtung 8 aufgenommenen Kraftstoffmengen auch bei Schräglagen der Entschäumungsvorrichtung 8 weitestgehend gleich groß sind.

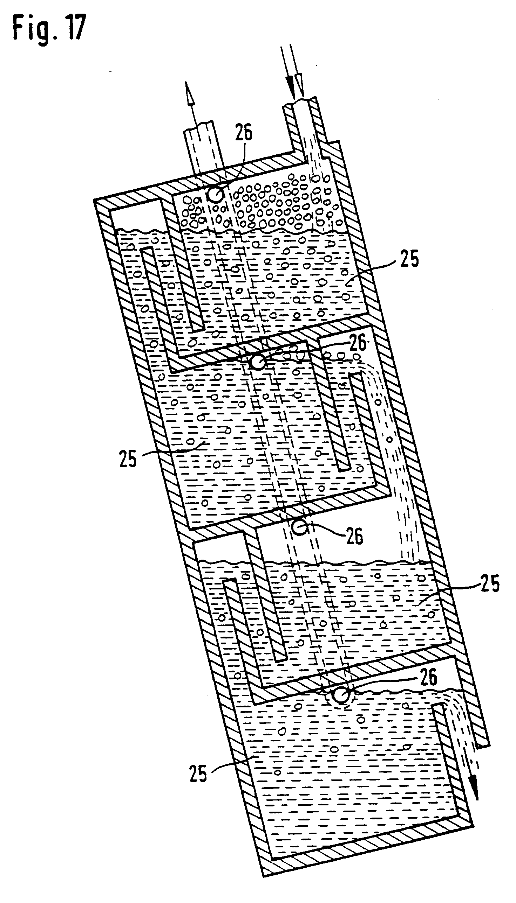

Gemäß Fig. 17 können die Kammern 25 auch übereinander angeordnet sein, wobei die Ausflußseiten der Kammern 25 abwechselnd auf der einen und der anderen Seite angeordnet sind.

Aus der Entschäumungsvorrichtung 8 fließt der Kraftstoff zur Kraftstoffsammelzone 9. Grundsätzlich ist es jedoch auch möglich, eine gesonderte Entschäumungsvorrichtung 8 wegzulassen und die Rücklaufleitung 4 unmittelbar in die Kraftstoffsammelzone 9 einmünden zu lassen.

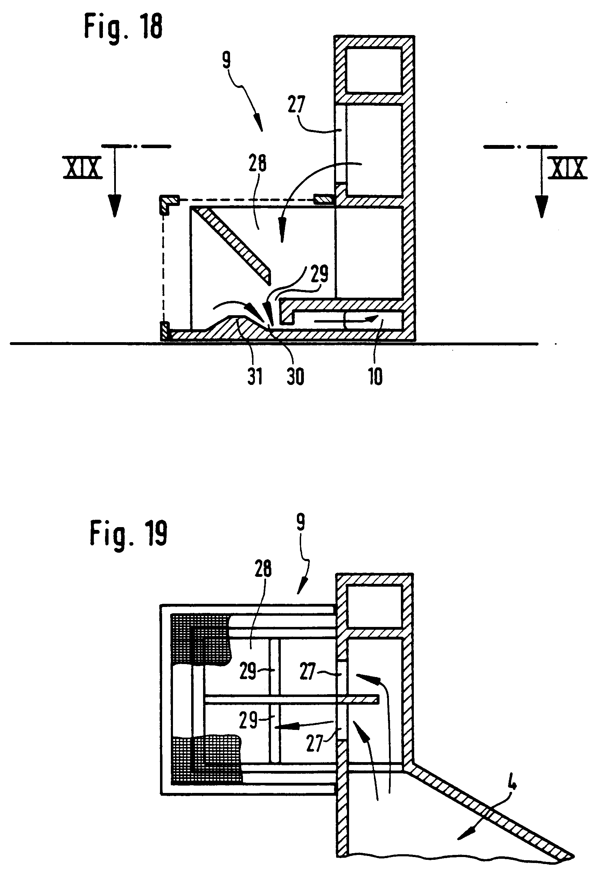

Die Kraftstoffsammelzone 9 nach Fig. 18 und 19 ist so ausgebildet, daß bei leerem oder fast leerem Haupttank 5 sowohl bei normaler Fahrt in der Ebene als auch bei Schräglage sowie bei extremer Kurven-, Berg- oder Talfahrt möglichst die gesamte, über die Rücklaufleitung 4 zurückgeführte Menge des Kraftstoffes aufgefangen und dem Eingang der Zuführleitung 10 zugeführt werden kann.

Dazu fällt der Kraftstoff nach dem Verlassen der Entschäumungsvorrichtung 8 bzw. der Rücklaufleitung 4 durch ein Fenster 27 in einen Trichter 28, welcher an seiner Unterseite einen Schlitz 29 aufweist, durch den der Kraftstoff direkt vor den Eingang 30 der Zuführleitung 10 strömt. Der Schlitz 29 ist so bemessen, daß der Kraftstoff aus dem Trichter 28 vergleichweise langsam ausläuft, d.h. die durch den Schlitz 29 auslaufende Strömungsmenge entspricht etwa der durch die Rücklaufleitung 4 zuströmenden Strömungsmenge, so daß der Trichter 28 praktisch nicht leerlaufen kann.

Vor dem Schlitz 29 und dem Eingang 30 ist ein Wall 31 angeordnet, durch den bei Schräglagen vermieden wird, daß der Kraftstoff ohne weiteres vom Eingang 30 der Zuführleitung 10 weglaufen kann. Im übrigen kann über den Wall 31 hinweg auch Kraftstoff aus dem Tankteil 5'' zum Eingang 30 der Zuführleitung 20 strömen.

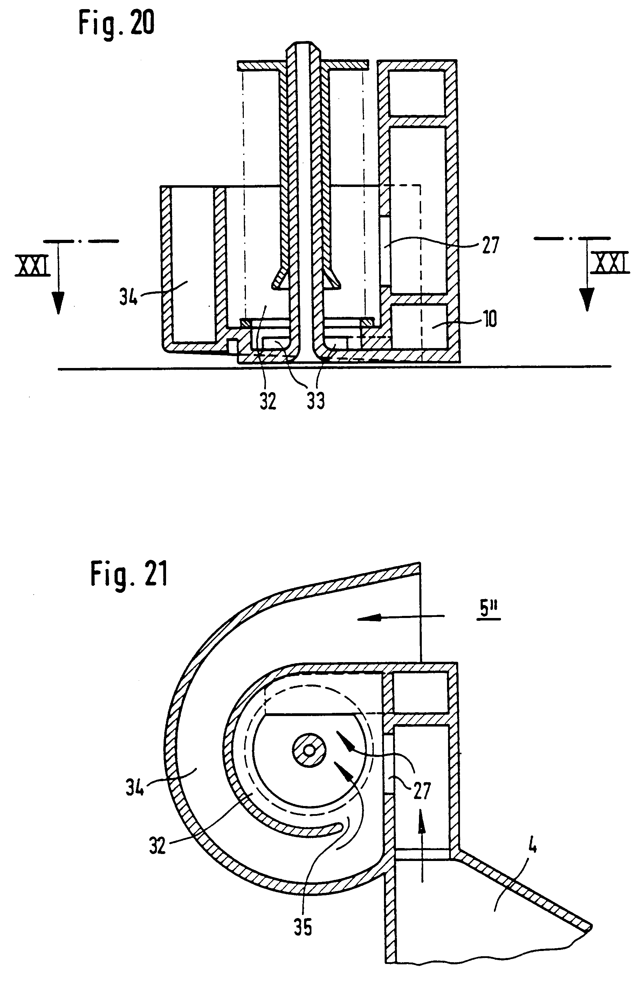

Bei der in den Fig. 20 und 21 dargestellten Kraftstoffsammelzone 9 fällt der Kraftstoff durch das Fenster 27 in einen Auffangbecher 32, welcher an seinem Boden über einen Schlitz 33, welcher auch durch mehrere kleinere Öffnungen ersetzt sein kann, mit der Zuführleitung 10 verbunden ist, d.h. der Schlitz 33 bzw. die statt dessen vorgesehenen Öffnungen bilden den Eingang der Zuführleitung 10. Außerdem kann Kraftstoff aus dem Tankteil 5'' über einen den Auffangbecher 32 spiralförmig umschließenden Kanal 34 und eine seitliche Öffnung 35 in der Umfangswand des Auffangbechers 32 in denselben einströmen. Auch bei Schräglagen des Auffangbechers 32 kann aufgrund der Spiralform des Kanals 34 nur vergleichsweise wenig Kraftstoff aus dem Auffangbecher 32 zum Tankteil 5'' auslaufen. Praktisch wird der gesamte Kraftstoffinhalt des Auffangbechers 32 über den Schlitz 33 bzw. die entsprechenden Öffnungen der Zuführleitung 10 zugeführt.

## Patentansprüche

1. Tanksystem für flüssigen Kraftstoff, insbesondere für Verbrennungsmotoren in Kraftfahrzeugen, mit
- einem Haupt- sowie einem Reservetank (5,11),
- einer vom Haupt- zum Reservetank führenden Zuführleitung (10),
- einer vom Reservetank zum Verbraucher bzw. Motor (2) führenden Vorlaufleitung (16) mit Vorlaufpumpe (17) und
- einer vom Verbraucher bzw. Motor zum Tanksystem führenden Rücklaufleitung (4),
**dadurch gekennzeichnet,**
daß der Reservetank (11) unter Ausnutzung eines von der Vorlaufpumpe (17) saugseitig erzeugten Unterdruckes über die Zuführleitung (10) aus dem Haupttank (5) nachfüllbar sowie mit einer Zwangsentlüftung versehen ist.

2. Tanksystem nach Anspruch 1,
**dadurch gekennzeichnet,**
daß die Eingangsöffnung der Zuführleitung (10) in einer offenen Kraftstoffsammelzone (9) des Haupttanks (5) angeordnet ist, in die der rücklaufende Kraftstoff aus der Rücklaufleitung (4) sowie Kraftstoff aus dem Haupttank (5) einströmt bzw. einzuströmen vermag.

3. Tanksystem nach Anspruch 1 oder 2,
**dadurch gekennzeichnet,**
daß der Kraftstoffstrom in der Rücklaufleitung (4) eine strömungsdynamische Entlüftungsanordnung treibt.

4. Tanksystem nach einem der Ansprüche 1 bis 3,
**dadurch gekennzeichnet,**
daß der Kraftstoffstrom in der Rücklaufleitung (4) eine erste Injektorpumpe (6) treibt, mit der Kraftstoff aus verschiedenen Tankteilen (5',5'') des Haupttanks (5) in einen Einlaufbereich (9) der Zuführleitung (10) förderbar ist.

5. Tanksystem nach einem der Ansprüche 1 bis 4,
**dadurch gekennzeichnet,**
daß der Saugunterdruck der Vorlaufpumpe (17) zur Entlüftung des Reservetanks (11) ausnutzbar ist.

6. Tanksystem nach Anspruch 5,
**dadurch gekennzeichnet,**
daß in bzw. an der Zuführleitung (10) eine durch den von der Vorlaufpumpe (17) im Reservetank (11) erzeugbaren Unterdruck betriebene zweite Injektorpumpe (12) angeordnet und mit ihrer Saugseite mit dem oberen Bereich des Reservetanks (11) verbunden ist, und daß die Zuführleitung (10) in Strömungsrichtung hinter der Injektorpumpe (12) einen Ausgang (14) besitzt, welcher einem Einlauf (15) der Vorlaufleitung (16) benachbart bzw. damit kombiniert und unter einer Abschirmung (18) angeordnet ist, welche ein Aufsteigen von Luftblasen nach oben zumindest im wesentlichen verhindert und ein Eindringen der Luftblasen in den Einlauf (15) der Vorlaufleitung (16) erleichtert.

7. Tanksystem nach Anspruch 5,
**dadurch gekennzeichnet,**
daß die Zuführleitung (10) im bzw. am Reservetank (11) ein vom zugeführten Kraftstoff von oben nach unten durchströmtes Fallrohr mit einer mit dem oberen Bereich des Reservetanks (11) kommunizierenden ersten Öffnung (24) und einer mit dem unteren Bereich des Reservetanks (11) kommunizierenden zweiten Öffnung (Ausgang 14) bildet, welche einem Einlauf (15) der Vorlaufleitung (16) benachbart bzw. damit kombiniert und unter einer Abschirmung (18) angeordnet ist, welche ein Aufsteigen von Luftblasen nach oben zumindest im wesentlichen verhindert und ein Eindringen der Luftblasen in den Einlauf (15) der Zuführleitung (16) erleichtert.

8. Tanksystem nach einem der Ansprüche 5 bis 7,
**dadurch gekennzeichnet,**
daß im Fallrohr hinter der ersten Öffnung (24) bzw. in der Zuführleitung (10) hinter der Injektorpumpe (12) Störkonturen (21) zur Erzeugung von wirbelartig bzw. wirbelähnlich wechselnden Strömungspfaden im Treibstoffstrom angeordnet sind, um ein Hängenbleiben bzw. Wachsen von Luftblasen zu verhindern.

9. Tanksystem nach Anspruch 5,
**dadurch gekennzeichnet,**
daß in bzw. an der Vorlaufleitung (16) hinter deren Einlauf (15) eine strömungsdynamische Pumpvorrichtung zur Entlüftung des Reservetanks (11) angeordnet ist.

10. Tanksystem nach Anspruch 5,
**dadurch gekennzeichnet,**
daß die Vorlaufleitung (16) einen im wesentlichen ungedrosselten Einlauf (15) in einem unteren Bereich des Reservetanks (11) sowie eine an einem oberen Bereich des Reservetanks (11) angeschlossene gedrosselte Verbindung zur Entlüftung des Reservetanks (11) aufweist.

11. Tanksystem nach einem der Ansprüche 1 bis 10,
**dadurch gekennzeichnet,**
daß druckseitig der Vorlaufpumpe (17) ein entlüftbares Kraftstoffilter (3) angeordnet ist.

12. Tanksystem nach einem der Ansprüche 1 bis 11,
**dadurch gekennzeichnet,**
daß unterdruckseitig der Vorlaufpumpe (17) - insbesondere am Kraftstoffilter (3) - eine Kraftstoffheizung angeordnet ist.

## Claims

1. Tank system for liquid fuel, in particular for internal combustion engines of motor vehicles, having
- a main tank and a backup tank (5, 11),
- a feed line (10) running from the main tank to the backup tank,
- a supply line (16) with a supply pump (17) running from the backup tank to the consumption or engine (2), and
- a return line (4) running from the consumption or engine to the tank system,
**characterised in that**
the backup tank (11) can be refilled by means of the feed line (10) from the main tank (5) by a vacuum generated on the suction side of the supply pump (17) and is provided with a forced-air vent.

2. Tank system as claimed in claim 1,
**characterised in that**
the inlet orifice of the feed line (10) is arranged in an open fuel-accumulator zone (9) of the main tank (5), into or towards which return fuel from the return line (4) and fuel from the main tank (5) can flow.

3. Tank system as claimed in claim 1 or 2,
**characterised in that**
the fuel flow in the return line (4) drives a venting system operated by the flow dynamics.

4. Tank system as claimed in one of claims 1 to 3,
**characterised in that**
the fuel flow in the return line (4) drives a first injector pump (6), by means of which fuel from the different tank sections (5', 5'') of the main tank (5) can be conveyed into an intake area (9) of the feed line (10).

5. Tank system as claimed in one of claims 1 to 4,
**characterised in that**
the suction pressure of the supply pump (17) can be used to vent the backup tank (11).

6. Tank system as claimed in claim 5,
**characterised in that**
a second injector pump (12) driven by means of a vacuum generated in the backup tank (11) by the supply pump (17) is arranged in or on the feed line (10) and the suction side thereof is connected to the upper region of the backup tank (11) and the feed line (10) has an outlet (14) after the injector pump (12) in the direction of flow, which is arranged adjacent to or combined with an inlet (15) of the supply line (16) and underneath a shield (18), which, at least to a large extent, prevents air bubbles from rising and facilitates entry of the air bubbles to the inlet (15) of the supply line (16).

7. Tank system as claimed in claim 5,
**characterised in that**
the feed line (10) in or on the backup tank (11) forms a down pipe through which the fuel is fed from top to bottom having a first orifice (24) communicating with the upper region of the backup tank (11) and a second orifice (outlet 14) communicating with the lower region of the backup tank (11), which is arranged adjacent to or combined with an inlet (15) of the supply line (16) and underneath a shield (18), which prevents air bubbles from rising and facilitates entry of the air bubbles to the inlet (15) of the supply line (16).

8. Tank system as claimed in one of claims 5 to 7,
**characterised in that**
baffles (21) are arranged after the first orifice (24) in the down pipe or after the injector pump (12) in the feed line (10) in order to produce alternating swirl-like or swirl-effect flow paths in the drive flow in order to prevent air bubbles from remaining in suspension or building up.

9. Tank system as claimed in claim 5,
**characterised in that**
a flow-dynamic pumping device is provided after the inlet (15) in or at the supply line (16) for the purpose of venting the backup tank (11).

10. Tank system as claimed in claim 5,
**characterised in that**
the supply line (16) has an essentially non-throttled inlet (15) in a lower region of the backup tank (11) as well as a throttled connection adjoining an upper portion of the backup tank (11) in order to vent the backup tank (11).

11. Tank system as claimed in one of claims 1 to 10,
**characterised in that**
a fuel filter (3) that can be ventilated is arranged on the pressure side of the supply pump (17).

12. Tank system as claimed in one of claims 1 to 11,
**characterised in that**
a fuel heating device is provided on the vacuum side of the supply pump (17) - in particular on the fuel filter (3).

## Revendications

1. Système de réservoir de carburant liquide, en particulier pour moteurs à combustion interne de véhicules automobiles, comprenant :
• un réservoir principal (5) et un réservoir de secours (11),
• une conduite d'amenée (10) allant du réservoir principal au réservoir de secours,
• une conduite d'alimentation (16) menant du réservoir de secours au consommateur ou moteur (2) et contenant une pompe d'alimentation (17), et
• une conduite de retour (4) menant du consommateur ou moteur au système de réservoir,
caractérisé en ce que le réservoir de secours (11) est remplissable à travers la conduite d'amenée (10), à partir du réservoir principal (5), avec exploitation d'une dépression générée côté aspiration par la pompe d'alimentation (17), et est pourvu d'une purge d'air forcée.

2. Système de réservoir selon la revendication 1, caractérisé en ce que l'orifice d'entrée de la conduite d'amenée (10) est placé dans une zone collectrice de carburant ouverte (9) du réservoir principal (5), zone dans laquelle s'écoule ou peut s'écouler le carburant renvoyé sortant de la conduite de retour (4) ainsi que du carburant provenant du réservoir principal (5).

3. Système de réservoir selon la revendication 1 ou 2, caractérisé en ce que le courant de carburant dans la conduite de retour (4) fait fonctionner un dispositif de purge d'air utilisant les effets dynamiques d'un écoulement.

4. Système de réservoir selon l'une des revendications 1 à 3, caractérisé en ce que le courant de carburant dans la conduite de retour (4) fait fonctionner une première pompe à jet (6) par laquelle du carburant provenant de différentes parties (5', 5'') du réservoir principal (5) peut être refoulé dans une zone d'entrée (9) de la conduite d'amenée (10).

5. Système de réservoir selon l'une des revendications 1 à 4, caractérisé en ce que la dépression d'aspiration de la pompe d'alimentation (17) est utilisable pour la purge d'air du réservoir de secours (11).

6. Système de réservoir selon la revendication 5, caractérisé en ce qu'une seconde pompe à jet (12), mue par la dépression que la pompe d'alimentation (17) est capable de produire dans le réservoir de secours (11), est montée dans ou sur la conduite d'amenée (10) et raccordée par son côté aspiration à la région supérieure du réservoir de secours (11), et que la conduite d'amenée (10) possède, derrière la pompe à jet (12) dans le sens de l'écoulement, une sortie (14) située à proximité d'une entrée (15) de la conduite d'alimentation (16), ou combinée avec cette entrée, et placée sous un écran de recouvrement (18) qui empêche, tout au moins pour l'essentiel, la montée de bulles d'air et facilite la pénétration des bulles d'air dans l'entrée (15) de la conduite d'alimentation (16).

7. Système de réservoir selon la revendication 5, caractérisé en ce que la conduite d'amenée (10) forme, dans ou sur le réservoir de secours (11), un tuyau de chute à travers duquel le carburant amené s'écoute de haut en bas, tuyau qui présente un premier orifice (24) communiquant avec la région supérieure du réservoir de secours (11) et un second orifice (sortie 14) communiquant avec la région inférieure du réservoir de secours (11), le second orifice étant disposé à proximité d'une entrée (15) de la conduite d'alimentation (16), ou combiné avec cette entrée, et étant placé sous un écran de recouvrement (18) qui empêche, tout au moins pour l'essentiel, la montée de bulles d'air et facilite la pénétration des bulles d'air dans l'entrée (15) de la conduite d'alimentation (16).

8. Système de réservoir selon l'une des revendications 5 à 7, caractérisé en ce que des contours perturbateurs (21), destinés à générer des trajets d'écoulement alternant comme des tourbillons ou à la façon de tourbillons dans le courant de carburant, sont disposés dans le tuyau de chute derrière le premier orifice (24) ou dans la conduite d'amenée (10) derrière la pompe à jet (12) afin d'empêcher l'accrochage ou la croissance de bulles d'air.

9. Système de réservoir selon la revendication 5, caractérisé en ce qu'un dispositif de pompage, utilisant les effets dynamiques d'un écoulement, est placé dans ou sur la conduite d'alimentation (16), derrière son entrée (15), en vue de la purge d'air du réservoir de secours (11).

10. Système de réservoir selon la revendication 5, caractérise en ce que la conduite d'alimentation (16) présente une entrée (15) qui est essentiellement non étranglée dans une région inférieure du réservoir de secours (11), ainsi qu'une liaison étranglée, raccordée à une région supérieure du réservoir de secours (11), pour la purge d'air de ce réservoir (11).

11. Système de réservoir selon l'une des revendications 1 à 10, caractérisé en ce qu'un filtre à carburant (3), susceptible d'être purgé d'air, est placé du côté refoulement de la pompe d'alimentation (17).

12. Système de réservoir selon l'une des revendications 1 à 11, caractérisé en ce qu'un dispositif de chauffage de carburant est placé du côté dépression de la pompe d'alimentation (17), en particulier sur le filtre à carburant (3).
